# DEMANDE DE BREVET EUROPEEN

(11) **EP 1 450 222 A2**
(43) Date de publication de la demande: **25.08.2004**
(21) Numéro de dépôt: 03354094.9
(22) Date de dépôt: 22.12.2003
(51) Int. Cl.: G05B 19/042

(54) **Processeur d'automatisme embarqué, temps réel et déterministe**

(30) Priorité: 27.12.2002 FR 0216799
(71) Demandeur: UXP, 38170 Seyssinet-Pariset (FR)
(72) Inventeur: Jay, Robert, 38800 Le Pont De Claix (FR)
(74) Mandataire: Jouvray, Marie-Andrée

(57) **Abrégé**

Le processeur d'automatisme embarqué est formé sur une carte électronique et comporte une unité centrale (3), réalisant des fonctions d'automatisme, d'asservissement et de communication, et des moyens de connexion vers l'extérieur. L'unité centrale (3) fonctionne sous Linux, avec des fonctions temps réel déterministes développées avec un logiciel d'automatisme ALOGRAF® et dédiées aux automatismes et asservissements avancés. Le processeur comporte au moins une interface (6) de connexion à un bus série universel, une interface (4) de connexion à un réseau de type Ethernet, et des entrées/sorties industrielles locales (19, 20) dédiées à des fonctions de sécurité, de manière à constituer un processeur d'automatisme universel temps réel déterministe.

## Description

### Domaine technique de l'invention

L'invention concerne un processeur embarqué formé sur une carte électronique et comportant une unité centrale, fonctionnant sous Linux et réalisant des fonctions de communication, et des moyens de connexion vers l'extérieur comportant au moins une interface de connexion à un bus série universel et une interface de connexion à un réseau de type Ethernet.

### État de la technique

Une carte électronique constituant un processeur pour des applications embarquées est connue, notamment de l'article "Cyberboard™ pour applications OEM embarquées - Carte CPU compatible PC" du 24/10/2001. Un tel processeur peut fonctionner sous Linux et comporte diverses interfaces de connnexion. Une telle carte est une carte standard, universelle, destinée à être utilisée dans un PC industriel pour des applications embarquées.

La société UXP commercialise un atelier logiciel d'automatisme, dénommé ALOGRAF®, qui permet le développement, en langage d'automaticien et sur une plate-forme informatique standard, d'applications d'automatismes haute performance, puis leur chargement et leur exécution sur une machine-cible ouverte, qui peut être constituée par un automate ouvert, un calculateur industriel, un ordinateur industriel de type PC ou une carte micro dédiée.

ALOGRAF® produit directement, à partir d'une description du comportement du système à automatiser en langage Grafcet (Graphe fonctionnel de commande des étapes et transitions), des instructions en langage informatique de type C ou C++ compilé et optimisé, permettant la structuration et la réalisation d'applications d'acquisition et de contrôle-commande temps réel rapides et déterministes.

L'algorithme de traitement du Grafcet avec recherche de stabilité (AARS) d'ALOGRAF® garantit un comportement déterministe et synchrone de l'automatisme. En effet, cet algorithme associé à un mécanisme d'échantillonnage basé sur les travaux de Shannon, permet à ALOGRAF® de respecter les aspects temporels du Grafcet.

Ces caractéristiques permettent ainsi aux applications ALOGRAF® de fonctionner en des temps de traitements très courts. Ainsi, par exemple, dès qu'une application d'automatisme exige des temps de traitement inférieurs ou égaux à la milliseconde, ALOGRAF® prend le relais des automates traditionnels.

Actuellement, un utilisateur désirant développer une application d'automatisme à partir d'ALOGRAF® doit disposer, pour chaque type de cible ou, du moins, pour chaque type d'unité centrale, d'un environnement système (gestion d'horloge, liaison série, interruptions) capable de recevoir une application ALOGRAF® et de produire un code approprié pour l'unité centrale de sa cible. Or, l'utilisation de matériel standard est coûteux et limite le choix en ce qui concerne l'unité centrale et les blocs d'entrée/sortie.

### Objet de l'invention

L'invention a pour but de surmonter ces inconvénients et, plus particulièrement, de fournir un processeur d'automatisme embarqué ouvert, d'un coût abordable, pouvant fonctionner dans des environnements industriels.

Selon l'invention, ce but est atteint par un processeur selon les revendications annexées, en particulier par un processeur comportant des entrées/sorties industrielles locales dédiées à des fonctions de sécurité, l'unité centrale réalisant des fonctions d'automatisme et d'asservissement temps réel déterministes développées avec un logiciel d'automatisme ALOGRAF® et dédiées aux automatismes et asservissements avancés, de manière à constituer un processeur d'automatisme universel temps réel déterministe.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre les connexions avec l'extérieur d'une carte électronique sur laquelle est formé un processeur selon l'invention.
La figure 2 illustre schématiquement un processeur selon l'invention.
La figure 3 représente un processeur selon l'invention sous forme synoptique.

### Description de modes particuliers de réalisation.

Les principales fonctions du processeur d'automatisme selon l'invention sont les suivantes :
- Automatismes séquentiels et combinatoires, par l'intermédiaire d'ALOGRAF®,
- Fonctions de régulation et asservissement par des blocs fonctionnels intégrés,
- Appels de blocs fonctionnels métiers,
- Traitement des fonctions de sécurité (arrêt d'urgence, chien de garde, etc.),
- Fonctions de mise au point intégrées, connectées à ALOGRAF®,
- Fonctions de paramétrage par serveur Internet intégré,
- Fonctions de calculs complexes,
- Gestion des entrées/sorties sur réseaux de terrain,
- Communication avec un Superviseur, etc.

Il est notamment destiné à être utilisé dans les applications suivantes :
- Machines de production spéciales et de série,
- Bancs de test, de mesure et d'essai,
- Machines de contrôle et assemblage rapides,
- Contrôle qualité et productivité, pesage,
- Commandes numériques spécifiques, asservissements,
- Pilotage de Presses,
- Automatismes embarqués, robotique,
- Mesure de performances en temps réel, etc.

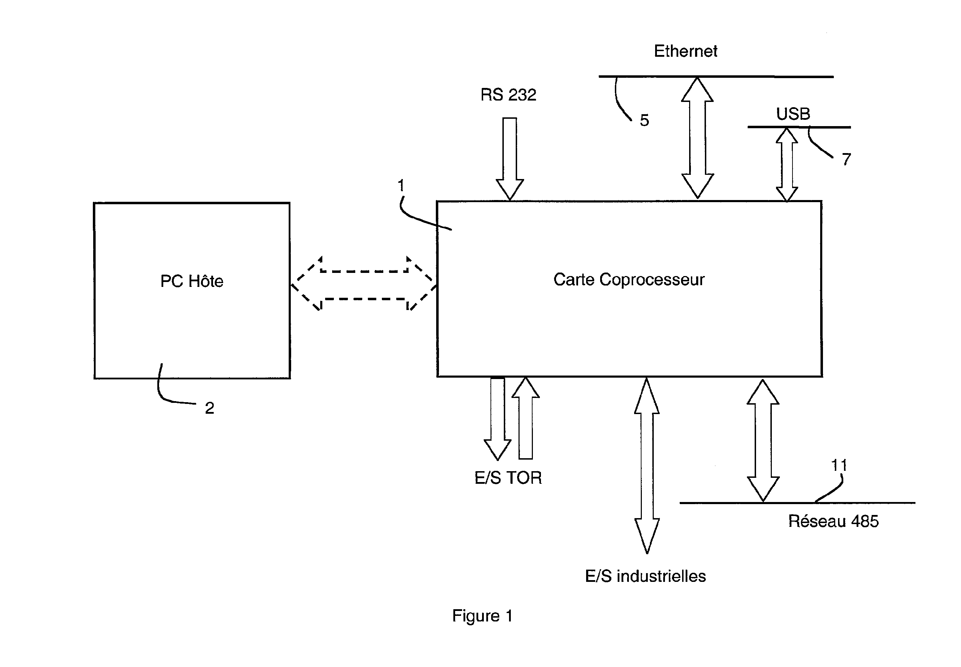

Comme représenté à la figure 1, le processeur selon l'invention est réalisé sur une carte électronique 1 et fonctionne avec un système d'exploitation de type Linux Temps Réel. Il peut fonctionner de manière autonome ou comme coprocesseur dans un processeur hôte 2 (PC), avec partage de la mémoire. L'utilisation de la carte intégrée dans un PC permet de séparer la partie informatique (interaction homme-machine, supervision), fonctionnant sous un système d'exploitation standard (DOS, Windows ou Linux), de la partie contrôle/commande qui fonctionne sous un système d'exploitation en temps réel. Le processeur est programmé avec l'atelier logiciel ALOGRAF® et supporte en toute sécurité les fonctions d'automatisme de manière indépendante.

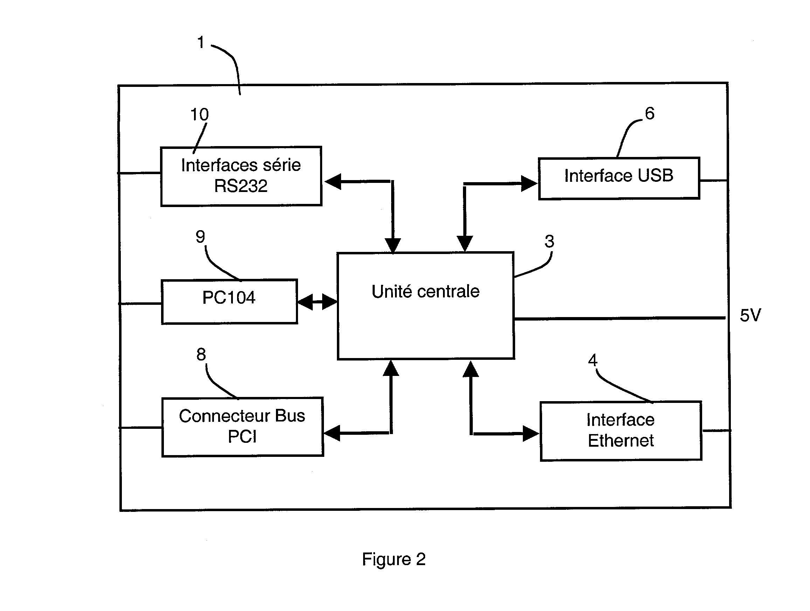

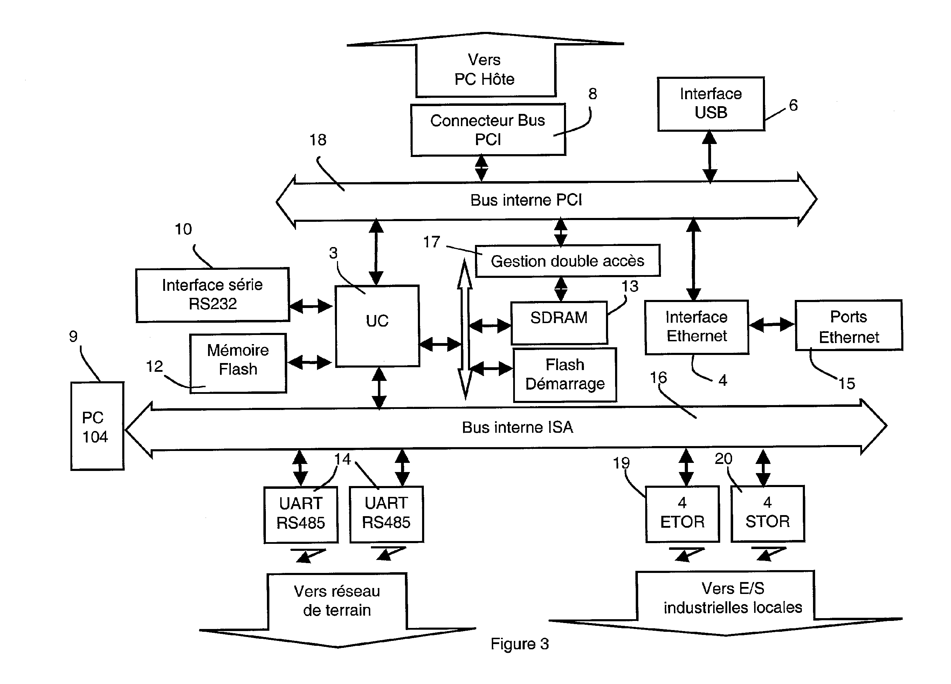

Comme représenté aux figures 2 et 3, le processeur comporte une unité centrale 3, compatible PC, par exemple articulée autour d'un microprocesseur de type Intel X86 inclus dans un composant intégré de type microcontrôleur. L'unité centrale est, de préférence, cadencée à une fréquence de 133Mhz, ce qui est relativement plus rapide que n'importe quel automate.

Comme représenté aux figures 1 et 2, le processeur comporte au moins une interface Ethernet 4 de connexion à un réseau 5 de type Ethernet et une interface USB 6 de connexion à un bus série universel (USB) 7. Il comporte également, de préférence, un connecteur 8 de Bus PCl (« Peripheral Component Interconnect »), pour la connexion au processeur hôte 2, un connecteur 9, par exemple de type PC 104, pour la connexion à des entrées/sorties industrielles extérieures, et des interfaces série 10 de connexion à des bus de communication série 11, de type RS 232 ou RS 485.

Il dispose également d'une mémoire de travail partageable (13, figure 3), de mémoires permanentes, d'entrées/sorties de sécurité locales (Arrêt urgence, Chien de garde, etc...), de ports de communication Ethernet, série, USB, de connecteurs de type PC 104 et PCI, etc.

L'utilisation d'un processeur, et plus particulièrement d'une unité centrale 3, réalisé en technologie CMOS non ventilée permet d'optimiser la consommation de la carte 1. À titre d'exemple, il est possible de limiter la consommation de la carte autour de 5 Watts, avec une entrée d'alimentation lui fournissant une tension d'alimentation de l'ordre de 5V. Cette faible consommation est plus particulièrement intéressante pour les systèmes embarqués.

Le processeur n'est pas alimenté par le bus interne du processeur hôte 2 mais par un connecteur dédié, de manière à fonctionner indépendamment du processeur hôte 2. Son fonctionnement est donc totalement autonome.

Dans un mode de réalisation préférentiel, le processeur comporte une mémoire instantanée 12 (mémoire flash) de type « DiskOnChip », d'une taille de 4Mo, connectée à l'unité centrale (3). Ce type de disque de stockage a l'avantage d'être entièrement électronique et moins fragile que les disques mécaniques. De plus, la mémoire flash est petite et légère, ce qui simplifie son intégration.

Une mémoire vive dédiée 13, de type SDRAM (« Synchronous dynamic random access memory ») de 32Mo, est également connectée à l'unité centrale (3). Intégrée directement sur la carte 1 et partageable avec le processeur hôte 2, elle permet de satisfaire tous les types de besoins des applications. L'utilisation d'une telle mémoire, fixe, permet notamment d'écarter tout problème lié aux contacts électriques, d'assurer son immunité mécanique (pas de dégradation aux chocs et aux vibrations) et d'éliminer les problèmes liés à l'environnement (poussière, graisse, etc.).

En ce qui concerne les périphériques de communication, le processeur intègre le minimum, tout en mettant à disposition le nécessaire pour ne pas être limité au niveau des possibilités offertes. Il comporte notamment:
- 2 ports 14, isolés, de type RS485 (« UART : Universal Asynchronous Receiver Transmitter »),
- 2 ports Ethernet 15, connectés à l'interface Ethernet 4 et ayant actuellement un débit maximum de 100 Mbps,
- 2 ports de type USB ayant actuellement un débit maximum de 60 Mo/sec, permettant le raccordement d'entrées/sorties rapides (codeurs, comptages, etc...)
- un connecteur 9 de type PC104, 16bits, pour des extensions réseaux, entrées/sorties industrielles et autres fonctions, etc.
- un connecteur 8, de type PCl pour l'accès à la mémoire 13 partagée du processeur par le PC hôte 2.

La carte 1 ne comportant ni écran, ni clavier, le second port Ethernet 15, les liaisons série RS232 et l'un des ports 14 sont notamment destinés à permettre à l'utilisateur de se connecter à diverses applications, telles qu'une liaison modem, un serveur Internet, un pupitre servant d'interface homme-machine, un superviseur, la télémaintenance, etc. Le téléchargement de l'application et son paramétrage se font, de préférence, par l'intermédiaire d'un des ports Ethernet 15.

Comme représenté à la figure 3, un bus interne 16, de type ISA (« Industry Standard Architecture »), connecte l'unité centrale 3 aux ports 14 et au connecteur 9 de type PC104. L'interface USB 6, le connecteur 8, l'interface Ethernet 4 et un circuit 17 de gestion double accès, connecté à la mémoire 13, sont, de préférence, connectés à l'unité centrale 3 par l'intermédiaire d'un autre bus interne 18, de type PCI.

La carte 1 étant dédiée à l'automatisme, elle ne comporte aucun élément superflu, tel qu'un contrôleur de type VGA (« Video Graphics Array ») ou des ports de connexion à un clavier ou à une souris. Ceci permet de ne pas perturber le système avec des interruptions supplémentaires.

Le processeur comporte, dans un but de sécurité, des entrées/sorties additionnelles connectées au bus interne 16 et destinées à être connectées à des entrées/sorties industrielles locales. Comme représenté à la figure 3, le processeur comporte, de préférence, 4 entrées 19 (ETOR) et 4 sorties 21 (STOR), de type tout ou rien (TOR), de préférence opto-électroniques et adaptées à des tensions de 24 à 48V.

Ces entrées additionnelles permettent notamment de disposer des fonctions suivantes :
- arrêt d'urgence, armement, marche - arrêt de l'application, etc., au niveau des entrées,
- autorisation de la mise en puissance d'organes de commandes du système à commander, chien de garde, etc., au niveau des sorties.

Ces fonctions sont affectées par paramétrage aux entrées/sorties concernées et, de manière analogue, des valeurs de repli en cas d'incident peuvent être affectées aux entrées/sorties restantes.

Dans un mode de réalisation préférentiel, le chien de garde permet de s'assurer que l'application fonctionne toujours en re-initialisant en permanence un compteur qui est décrémenté par une valeur prédéterminée (exemple : 20). S'il atteint zéro, on considère que l'application est endommagée et on arrête tout. Le chien de garde participe à la mise en sécurité du système commandé. En effet, il vaut mieux tout arrêter que de commander une machine de manière aléatoire. Quand le chien de garde se déclenche, il entraîne avec lui la chute de l'autorisation de mise en puissance des organes de commande du système à commander. Ce système intégré dans le processeur fonctionne en parallèle avec le système de sécurité indépendant qui doit équiper toute machine.

L'utilisation du système d'exploitation Linux par le processeur permet de répondre aux exigences et contraintes temporelles d'un processeur d'automatisme ouvert. En effet, le système d'exploitation Linux peut être embarqué car il est suffisamment petit pour être mis sur un espace disque réduit, c'est-à-dire compris entre 4 et 16Mo. De plus, c'est un système « temps réel », gratuit, dont les sources sont accessibles (« open source ») et qui possède une chaîne de développement complète (compilateur, débuggeur, etc.).

De plus, ce système d'exploitation reste dans les standards du marché, ce qui permet de faire bénéficier l'utilisateur de la pérennité et de l'évolutivité de ce système.

Le système d'exploitation Linux est adapté aux besoins du processeur par l'utilisation des éléments suivants, qui sont tous disponibles gratuitement sur Internet:
- Le noyau Linux.
- La bibliothèque uClibc (« microcontroller C library »), plus particulièrement adaptée aux systèmes embarqués en raison de ses besoins relativement limités en terme d'espace disque.
- L'outil Busybox, qui combine en un seul programme, léger, plusieurs utilitaires de base (Is, rm, cp, ...) pour la maintenance du système.
- Le système Lilo de démarrage de Linux.

Il est ainsi possible de réaliser un système d'exploitation embarqué, utilisant moins de 4Mo, gratuit ( sous licence GPL, « General Public License »).

Bien que Linux s'adapte parfaitement aux applications à débit limité, il n'a pas été conçu pour répondre de manière déterministe. Cependant, des perfectionnements garantissant le déterminisme sont disponibles pour le noyau.

En effet, les noyaux préemptifs permettent à un processus utilisateur d'être interrompu au milieu d'un appel système de sorte qu'un processus nouvellement réveillé de plus grande priorité puisse s'exécuter. Cette préemption ne peut pas être faite sans risques dans des endroits arbitraires du code du noyau. Une section de code où la sécurité n'est pas assurée est appelée section critique. Ainsi, une section critique est une section du code qui ne doit pas être exécutée par plus d'un processus en même temps.

Par ailleurs, le temps de réponse d'une application est l'intervalle de temps entre le moment où elle reçoit un stimulus, habituellement fourni par l'intermédiaire d'une interruption matériel, et le moment où l'application a produit un résultat basé sur ce stimulus.

Deux « patchs », c'est-à-dire deux modifications de programme du noyau, le patch de préemption (« preemptible patch ») de Robert M. Love et le patch de latence basse (« low-latency patch ») de Ingo Molnar puis Andrew Morton, permettent de réduire la latence de l'ordonnanceur de Linux, c'est-à-dire le délai entre l'apparition d'une interruption et le fonctionnement du processus qui sert l'interruption.

Des tests de latence, réalisés avec un système uniprocesseur, du type utilisé dans les systèmes embarqués Linux, ont permis de montrer que chacun des deux patchs, pris indépendamment, réduit significativement la latence du noyau. Les tests ont été réalisés sur un noyau chargé, c'est-à-dire avec une activité des processus très importante, ainsi que l'activité disque, et Xwindows en fonctionnement.

Les essais ont montré que les patchs de latence basse apportent la meilleure réduction de latence de l'ordonnanceur du noyau. En effet ces patchs ont une latence maximum enregistrée à 1,3 milliseconde, alors que les patchs de préemption ont une latence maximum de 45,2 millisecondes.

Cependant, un noyau modifié avec une combinaison des patchs de préemption et de latence basse permet d'obtenir une latence maximum de l'ordonnanceur de 1,2ms, soit une légère amélioration par rapport au noyau de latence basse.

Des tests d'endurance, menés sur une période longue de plus de douze heures, ont permis de montrer que le fonctionnement d'un noyau modifié seulement par le patch de latence basse donne une valeur de latence maximum de 215,2ms. Par contre ces mêmes tests d'endurance avec les deux patchs combinés permettent de montrer que la valeur de latence maximale est alors de 1,5ms.

La meilleure solution pour réduire la latence de l'ordonnateur Linux est ainsi fournie par la combinaison des deux patchs précités.

Le déterminisme est respecté lorsque des intervalles de temps interne, associés à la partie commande du système, régie par ALOGRAF® et l'Algorithme Avec Recherche de Stabilité (AARS), sont infiniment petits, donc considérés nuls à l'échelle des temps externes, associés à la partie opérative du système. Ainsi, à l'échelle du temps externe, tout changement d'état des entrées est pris en compte par le modèle, dès son apparition. La totalité des conséquences de cet événement sur le modèle est déterminé à temps nul. Depuis l'extérieur du modèle, les événements d'entrées et les états des sorties qui en résultent sont vus à la même date. Simultanément, à l'échelle du temps interne, la durée séparant l'instant où une transition est franchissable de l'instant où elle est franchie (appelée aussi durée d'évolution) est aussi petite qu'il est nécessaire, mais non nulle. En conséquence, la durée minimale de l'activité d'une étape ne sera jamais nulle.

Le processeur ne comportant ni disque dur, ni composant VGA, ni clavier, ni souris, il n'a pas besoin des gestionnaires correspondants. Or, ce sont ces derniers qui consomment le plus de ressources en terme d'unité centrale, de mémoire et d'interruptions. Ces gestionnaires, normalement inclus dans le système LINUX, sont donc supprimés dans le processeur selon l'invention.

Par ailleurs les seules tâches implantées sous le système Linux dans le processeur selon l'invention sont celles qui sont nécessaires à la gestion de l'application d'automatisme générée par ALOGRAF®, ainsi que les pilotes des ports Ethernet, Série et USB.

Dans le cadre d'une application modèle ALOGRAF®, comportant 20 Grafcets, avec des accès sur un port Ethernet, on a pu mesurer des temps d'exécution de l'ordre de 100 microsecondes, soit 10 fois inférieurs à ceux précédemment obtenus. Ainsi, pour de grosses applications, comportant plus de 100 grafcets, le temps de cycle d'application est de l'ordre de la milliseconde.

Le cadencement de l'application est auto-ajustable en fonction du temps d'exécution d'un cycle Grafcet, lui-même dimensionné pour être synchronisé avec la partie opérative de l'application. Ainsi, en fonction de l'indicateur de temps de cycle instantané disponible dans l'application ALOGRAF®, celle-ci peut demander le cadencement souhaité.

L'application générée est donc cadencée et synchronisée par rapport à une horloge temps réel (RTC), sauvegardée par une batterie, de la carte 1. L'horloge temps réel est configurable à des fréquences allant de 64 Hz à 8192 Hz, soit des périodes de 125 microsecondes à 15,6 millisecondes.

De plus, le niveau de priorité de l'application ALOGRAF® est paramétrable afin de profiter du noyau préemptif de Linux. En fonction de son application l'utilisateur choisira, à partir du serveur Internet du processeur selon l'invention, de privilégier soit les tâches de communication soit la tâche application ALOGRAF®.

La chaîne de développement d'une application ALOGRAF®, sur un ordinateur, est composée de :
- l'atelier logiciel d'automatisme ALOGRAF® générant du code C/C++ à partir de Grafcet,
- Cygwin, un environnement UNIX pour Windows. Il est composé d'une bibliothèque de liens dynamiques (dII : « Dynamic Link Library ») qui agit comme une couche émulant UNIX, fournissant les fonctionnalité de l'API (« Application Programming Interface ») UNIX. Il est aussi composé d'une collection d'outils portés d'UNIX,
- GCC, le compilateur C/C++ utilisé par Linux.

Grâce à l'intégration de GCC et de Cygwin à ALOGRAF®, l'application est compilée en compilation croisée (« cross-compilation »), ce qui permet d'avoir un système embarqué sans compilateur intégré à LINUX, et donc un gain de place significatif sur la carte 1.

Physiquement, l'utilisateur dispose d'un ordinateur de développement et de la carte 1.

Le système d'exploitation est livré avec la carte 1, implanté dans la mémoire instantanée 12. De même la carte 1 intègre les utilitaires nécessaires à l'exploitation de l'application ALOGRAF®. L'utilisateur n'a plus qu'à télécharger l'exécutable de son application dans la mémoire instantanée 12 du processeur de la carte 1.

Le processeur est donc équipé d'un système embarqué limité aux stricts besoins d'une application ALOGRAF® et donc dédié à des fonctions d'automatisme, d'asservissement et de communication.

## Revendications

1. Processeur embarqué formé sur une carte électronique (1) et comportant une unité centrale (3), fonctionnant sous Linux et réalisant des fonctions de communication, et des moyens de connexion vers l'extérieur comportant au moins une interface (6) de connexion à un bus série universel et une interface (4) de connexion à un réseau de type Ethernet, processeur **caractérisé en ce qu'**il comporte des entrées/sorties industrielles locales (19, 20) dédiées à des fonctions de sécurité, l'unité centrale (3) réalisant des fonctions d'automatisme et d'asservissement temps réel déterministes développées avec un logiciel d'automatisme ALOGRAF® et dédiées aux automatismes et asservissements avancés, de manière à constituer un processeur d'automatisme universel temps réel déterministe.

2. Processeur selon la revendication 1, **caractérisé en ce que** l'unité centrale (3) est réalisée en technologie CMOS.

3. Processeur selon l'une des revendications 1 et 2, **caractérisé en ce qu'**il comporte une entrée d'alimentation destinée à lui fournir une tension de l'ordre de 5V.

4. Processeur selon l'une quelconque des revendications 1 à 3, **caractérisé en ce qu'**il comporte un bus interne (18), connecté à l'unité centrale (3) et à un circuit (17) de gestion double accès connecté à une mémoire (13) dédiée connectée à l'unité centrale (3), pour permettre le partage de mémoire avec un processeur hôte (2).

5. Processeur selon l'une quelconque des revendications 1 à 4, **caractérisé en ce que** l'unité centrale (3) utilise un noyau Linux modifié par une combinaison d'un patch de préemption et d'un patch de latence basse.

6. Processeur selon l'une quelconque des revendications 1 à 5, **caractérisé en ce que** les fonctions de sécurité associées aux entrées/sorties industrielles locales comportent une fonction d'arrêt d'urgence.

7. Processeur selon l'une quelconque des revendications 1 à 6, **caractérisé en ce que** les fonctions de sécurité associées aux entrées/sorties industrielles locales comportent une fonction d'armement.

8. Processeur selon l'une quelconque des revendications 1 à 7, **caractérisé en ce que** les fonctions de sécurité associées aux entrées/sorties industrielles locales comportent une fonction marche-arrêt.

9. Processeur selon l'une quelconque des revendications 1 à 8, **caractérisé en ce que** les fonctions de sécurité associées aux entrées/sorties industrielles locales comportent une fonction de chien de garde provoquant, en cas de déclenchement, l'interruption de l'alimentation en puissance d'un système commandé par le processeur.
